# EUROPEAN PATENT SPECIFICATION

(11) **EP 2 715 080 B1**
(45) Date of publication and mention of the grant of the patent: **27.07.2016**
(21) Application number: 11729478.5
(22) Date of filing: 24.05.2011
(51) Int. Cl.: F01N 3/08, F01N 9/00, B01D 53/94, F02D 41/02, B01J 23/52, B01J 23/755, B01J 23/89, B01J 37/00, B01J 37/03, B01J 37/18, B01J 35/00, B01J 35/02, B01J 35/04

(54) **EXHAUST GAS PURIFICATION SYSTEM**
ABGASREINIGUNGSSYSTEM
SYSTÈME D'ÉPURATION DES GAZ D'ÉCHAPPEMENT

(43) Date of publication of application: 09.04.2014
(73) Proprietor: TOYOTA JIDOSHA KABUSHIKI KAISHA, Toyota-shi, Aichi-ken, 471-8571 (JP)
(72) Inventor: OSAKI, Mayuko, Toyota-shi, Aichi-ken, 471-8571 (JP); LEPAGE, Muriel, B-1140 Brussels (BE)
(74) Representative: Intès, Didier Gérard André
(86) International application number: PCT/JP2011/062316
(87) International publication number: WO 2012/160709

(56) References cited:
- EP-A1- 2 151 563
- WO-A1-2010/101223
- US-A1- 2002 189 236
- US-A1- 2007 166 220
- US-A1- 2010 249 448
- US-B1- 6 279 537

## Description

### BACKGROUND OF THE INVENTION

### 1. Field of the Invention

The present invention relates to an exhaust gas purification system using a nitrogen oxide (below, sometimes abbreviated as "NO_{X}") purification catalyst, more particularly relates to an exhaust gas purification system able to improve the NO_{X} purification performance by an exhaust gas composition including hydrocarbons (below, sometimes abbreviated as "HC") at the time of non-steady operation.

### 2. Description of the Related Art

In recent years, from the viewpoint of protection of the global environment, emission controls have been toughened around the world. As one countermeasure, in internal combustion engines, an exhaust gas purification catalyst is being used. In such an exhaust gas purification catalyst, to efficiently remove the HC (hydrocarbons), carbon monoxide, and NOₓ in exhaust gas, platinum, gold, rhodium, and other precious metals are being used as the catalytic ingredients. In vehicles using such a purification catalyst, for example, gasoline engine vehicles or diesel engine vehicles, various systems are being used to improve the catalytic activity and the fuel economy. For example, to improve the fuel economy, in steady state operation, fuel is burned under a lean air-fuel ratio (A/F) (oxygen rich) conditions, while to improve the catalytic activity, fuel is burned temporarily under stoichiometric (stoichiometric air-fuel ratio, A/F=14.7) to rich (fuel excess) conditions.

This is because such conventional known platinum, palladium, rhodium, and other precious metal catalysts have a low NO_{X} purification performance under low temperature and oxidizing conditions. If raising the purification catalyst to a high temperature to improve the purification performance, it is necessary add HC or carbon monoxide etc. to obtain a reducing atmosphere. Due to the effects on the catalytic activity, even during steady operation, it is not possible to increase the air-fuel ratio (A/F). With such precious metal catalysts, there is therefore a limit to the improvement of the fuel economy. In this way, in conventional known precious metal catalysts, it is necessary to lower the energy required for raising the purification catalyst to a high temperature so as to obtain the purification performance and the air-fuel ratio (A/F) of the engine. To improve the fuel economy of automobile engines and other internal combustion engines, a new purification catalyst able to exhibit NO_{X} purification performance at a low temperature and/or in an oxidizing atmosphere is being sought. On the other hand, the precious metal catalysts all have problems of resource depletion. A purification catalyst which uses another metal, has a purification performance of an equal or better extent than a conventional precious metal catalyst, and can reduce the amount of catalyst or precious metal used has been sought. For this reason, various improvements have been tried out on purification catalysts.

For example, Japanese Patent Publication (A) No. 10-216518 describes a gold alloy catalyst of gold and one or two metals M of platinum, palladium, gold, copper, and nickel in which the weight ratio is made Au/M=1/9 to 9/1 and the amount of gold dissolved in the alloy is made 20 to 80 wt%. Further, the catalyst shown as a specific example in the publication is a catalyst comprised of gold and a metal M carried as a gold alloy with palladium or platinum on an Al₂O₃ carrier. Under a reducing atmosphere, it exhibits a high NO_{X} purification performance, but at a low temperature and/or in an oxidizing atmosphere, the NO_{X} purification performance is low.

Further, Japanese Patent Publication (A) No. 2001-239161 describes a low temperature harmful gas purification catalyst comprised of a carrier of a metal oxide or carbonaceous material on which, using a high temperature, high pressure fluid, ultrafine particles of at least one type of metal selected from the group comprised of platinum, palladium, rhodium, ruthenium, iridium, osmium, gold, silver, copper, manganese, iron, and nickel is carried. Further, the catalyst shown as a specific example in the publication is a purification catalyst on which one type of platinum, palladium, rhodium, ruthenium, nickel, or gold is carried and which exhibits NO_{X} purification performance in a reducing atmosphere.

Further US 2010/0249448 A1 shows a supported composite particle material comprising: a composite particle formed of an oxidized nickel and X (wherein X represents at least one of elements selected from the group consisting of nickel, palladium, platinum, ruthenium, gold, silver and copper).

However, with exhaust gas purification systems having these known NO_{X} purification catalysts, it is difficult to reduce the amount of use of precious metal and achieve an NO_{X} purification performance at a low temperature and/or in an oxidizing atmosphere. This is because the NO_{X} reaction activity of the NO_{X} purification catalyst is affected by the composition in the exhaust gas.

### SUMMARY OF THE INVENTION

Therefore, an object of the present invention is to provide an exhaust gas purification system which uses an NO_{X} purification catalyst reducing the amount of use of precious metal and able to exhibit an NO_{X} purification performance at a low temperature and/or in an oxidizing atmosphere and which has an NO_{X} purification performance even by an exhaust gas composition containing HC and NO_{X} at the time of non-steady operation etc.

The present invention relates to an exhaust gas purification system comprising an NO_{X} purification apparatus, provided with an NO_{X} purification catalyst provided in an exhaust gas passage and comprised of a carrier on which are carried nanoparticles including an alloy of gold atoms and nickel atoms in a state of close proximity, wherein the composition of the gold and nickel atoms is Au:Ni= 7 to 91 : 93 to 9 (at%), means for increasing carbon monoxide in exhaust gas fed to said NOx purification catalyst, means for predicting the amount of exhaust of NO_{X}, and configured so that, when it is predicted that NO_{X} will be exhausted, operates means for increasing carbon monoxide in exhaust gas fed to the NO_{X} purification catalyst and, when it is predicted that NO_{X} will not be exhausted, purifies exhaust gas exhausted from an engine by the NO_{X} purification catalyst without injection of excess fuel.

Summarizing the advantageous effects of the present invention, according to the present invention, it is possible to provide an NO_{X} purification catalyst reducing the amount of use of precious metal and able to exhibit an NO_{X} purification performance at a low temperature and/or in an oxidizing atmosphere and to give an NO_{X} purification performance even by an exhaust gas composition containing HC and NO_{X} at the time of non-steady operation etc.

### BRIEF DESCRIPTION OF THE DRAWINGS

These and other objects and features of the present invention will become clearer from the following description of the preferred embodiments given with reference to the attached drawings, wherein:
FIG. 1 is a graph showing comparatively the NO purification characteristics of NO_{X} purification catalysts obtained by reference examples and comparative examples;
FIG. 2 is a graph showing comparatively the NO purification characteristics of exhaust gases of various gas compositions of NO_{X} purification catalysts obtained by the reference examples;
FIG. 3 is a schematic view of an exhaust gas purification apparatus able to be used for an exhaust gas purification system of an embodiment of the present invention;
FIG. 4 is a schematic view of an exhaust gas purification apparatus able to be used for an exhaust gas purification system of another embodiment of the present invention; and
FIG. 5 is a schematic view of an exhaust gas purification system of an embodiment of the present invention.

### DESCRIPTION OF THE PREFERRED EMBODIMENTS

In the present invention, the exhaust gas purification system has to be an exhaust gas purification system using an NOₓ purification apparatus, provided with an NOₓ purification catalyst provided in an exhaust gas passage and comprised of a carrier on which are carried nanoparticles including gold atoms and nickel atoms in a state of close proximity and a means for predicting the amount of exhaust of NO_{X}, which, when it is predicted that NO_{X} will be exhausted, operates means for increasing carbon monoxide in exhaust gas fed to the NO_{X} purification catalyst and, when it is predicted that NO_{X} will not be exhausted, purifies exhaust gas exhausted from an engine by the NO_{X} purification catalyst without injection of excess fuel. Due to this, it is possible to provide an NO_{X} purification catalyst reducing the amount of use of precious metal and able to exhibit an NO_{X} purification performance at a low temperature and/or in an oxidizing atmosphere and to given an NO_{X} purification performance even by an exhaust gas composition containing HC and NO_{X} at the time of non-steady operation etc.

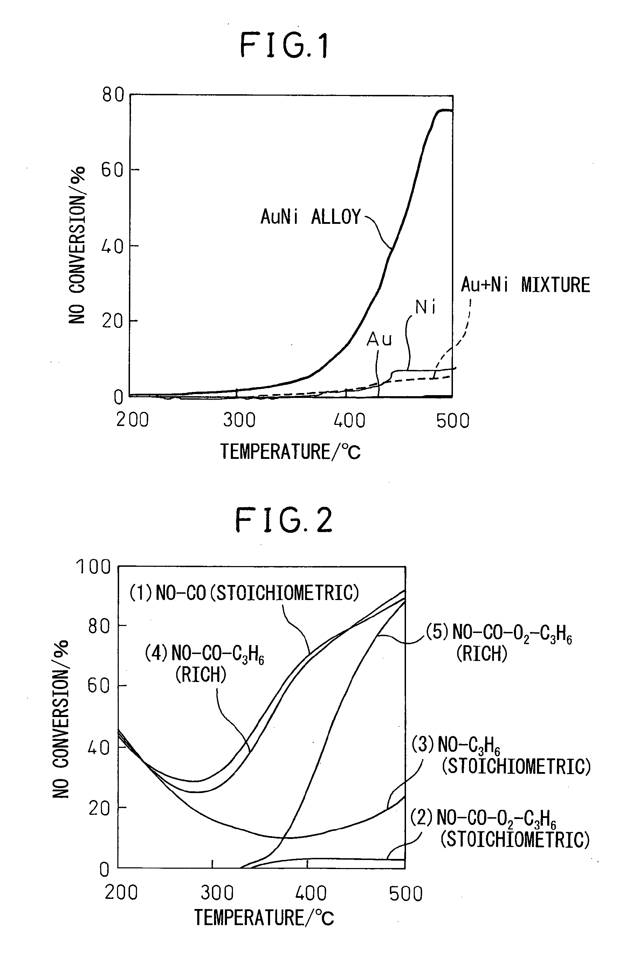

Below, referring to the drawings, embodiments of the present invention will be explained. Referring to FIG. 1, an NO_{X} purification catalyst of the present invention comprised of carrier particles on which are carried nanoparticles including gold atoms and nickel atoms in a state of close proximity, compared with an NO_{X} purification catalyst outside the scope of the present invention comprised of carrier particles on which nickel alone or gold alone is carried, exhibits an NO-CO catalytic activity in the temperature range of 300 to 500°C, in particular exhibits a high NO-CO catalytic activity even at a temperature of about 425°C or more. Further, with an NOₓ purification catalyst which, even if jointly using gold and nickel, is comprised of carrier particles on which is carried a simple mixture of these, not on which are carried nanoparticles including gold atoms and nickel atoms in a state of close proximity, the NO-CO catalytic activity at 500°C becomes conversely lower than with nickel alone.

Referring to FIG. 2, if using the NOₓ purification catalyst to treat exhaust gas of various compositions including C₃H₆ at the time of non-steady operation, compared with an NO-CO gas composition (stoichiometric) of a curve 1, in a temperature range of about 425 to 500°C, with an NO-CO-O₂-C₃H₆ exhaust gas composition (stoichiometric) of a curve 2 and an NO-C₃H₆ exhaust gas composition (stoichiometric) of a curve 3, in particular an NO-CO-O₂-C₃H₆ exhaust gas composition (stoichiometric) of a curve 2, the NO purification rates are low and, further with an NO-CO-C₃H6 exhaust gas composition (rich) of a curve 4 and an NO-CO-O₂-C₃H₆ exhaust gas composition (rich) of a curve 5, the NO purification rates are slightly low, but high NO purification rates are still obtained. That is, from FIG. 2, it will be understood that with an NOₓ purification catalyst comprised of the above carrier particles on which are carried gold atoms and nickel atoms in a state of close proximity and at which at least one of the two atoms comprises primary particles, under stoichiometric control, with a gas composition comprised of the exhaust gas in which C₃H₆ is copresent with NO, the NO purification activity greatly falls, but under rich control, if a gas composition in which C₃H₆ is included copresent with NO and carbon monoxide, the NO purification activity is high.

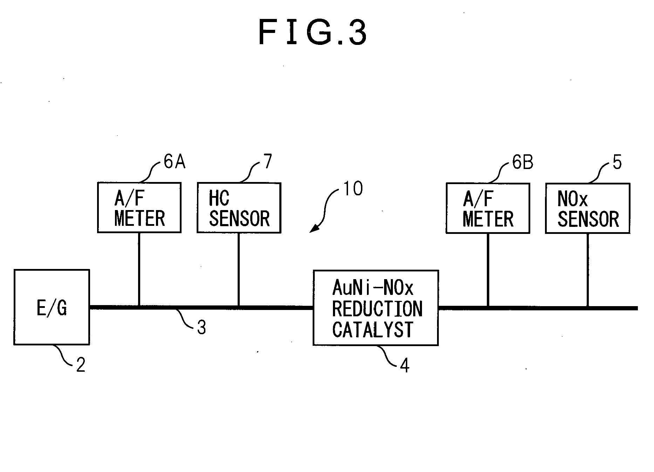

The present invention was made based on this discovery. An exhaust gas purification apparatus 10 able to be used for the exhaust gas purification system of an embodiment of the present invention, as shown in FIG. 3, is provided with, in an exhaust gas passage 3 from an engine 2, an NOₓ purification catalyst 4 comprised of carrier particles on which are carried gold atoms and nickel atoms in a state of close proximity and at which at least one of the two atoms comprises primary particles and, at a position at a downstream side of the NO_{X} purification catalyst (also referred to as an "AuNi-NO_{X} reducing catalyst") 4, an NO_{X} sensor 5, A/F meters 6A, 6B, and an HC sensor 7.

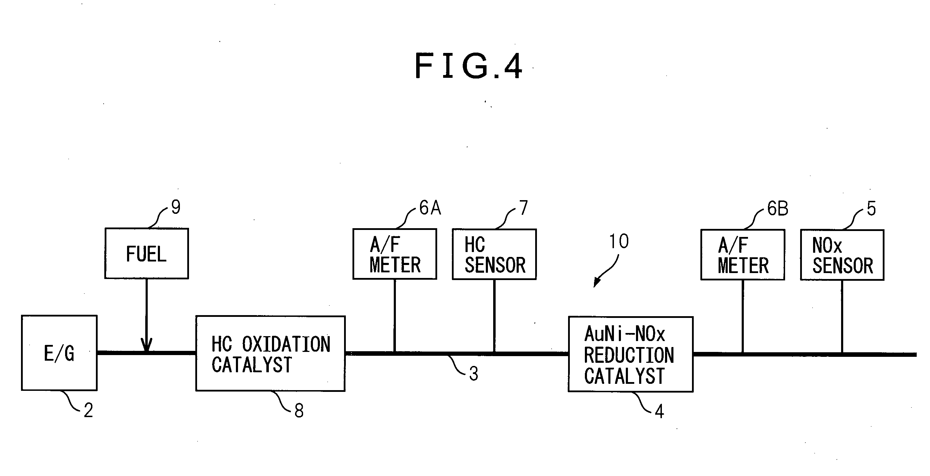

Further, an exhaust gas purification apparatus 10 able to be used for the exhaust gas purification system of another embodiment of the present invention, as shown in FIG. 4, is provided with, in an exhaust gas passage 3 from an engine 2, an NO_{X} purification catalyst 4 comprised of carrier particles on which are carried gold atoms and nickel atoms in a state of close proximity and at which at least one of the two atoms comprises primary particles (also referred to as an "AuNi-NO_{X} reducing catalyst"), at a position at a downstream side of the NO_{X} purification catalyst, an NO_{X} sensor 5, A/F meters 6A, 6B, and an HC sensor 7, at the upstream side of the NO_{X} purification catalyst 4, an oxidation catalyst 8 which partially oxidizes the HC in the exhaust gas at a position, and, at a position at the upstream side of the same, a fuel injection part 9.

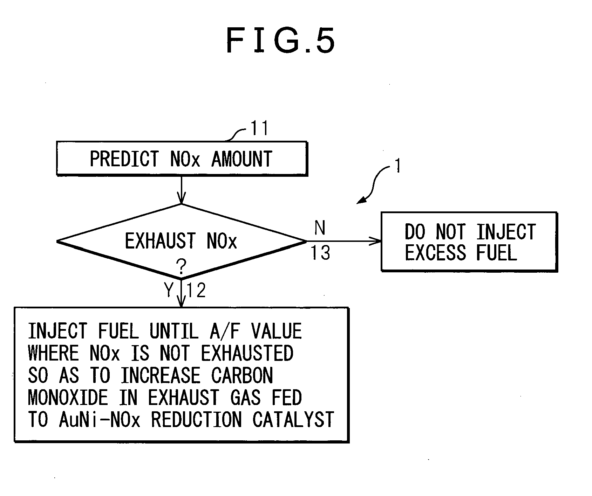

An exhaust gas purification system 1 of the present invention, as shown in FIG. 5, uses the NO_{X} purification apparatus to predict at step 11 if NO_{X} will be exhausted to the outside, when it is predicted that NO_{X} will be exhausted, that is, when it is predicted and/or measured that the exhaust gas contains unreacted HC together with NO_{X}, at step 12, operates means for increasing the carbon monoxide in the exhaust gas fed to the NO_{X} purification catalyst, and, when it is predicted that NO_{X} will not be exhausted, at step 13, purifies the exhaust gas exhausted from the engine by the exhaust purification catalyst in the present invention without injecting excess fuel. Whether or not the NO_{X} will be exhausted can be predicted from the relationship between the A/F value from the A/F meter 6A or 6B shown in FIG. 3 and FIG. 4, in particular the A/F value from the A/F meter 6B and the temperature estimated from a thermocouple (not shown) or the A/F value using a NO concentration map prepared in advance. Further, it is possible to predict and/or measure if the unreacted HC is included by, for example, a device which measures the amount of exhaust of the unreacted HC, for example, by the HC sensor 7 shown in FIG. 3 and FIG. 4.

In an embodiment of the present invention, the means for increasing the carbon monoxide in the exhaust gas fed to the NOₓ purification catalyst can control the engine by "fuel rich control". As the fuel rich control, as shown in FIG. 5, it is possible to inject fuel into the engine until an A/F value where no NOₓ will be exhausted. Further, in another embodiment of the present invention, the means for increasing the carbon monoxide may be injection of fuel from a fuel injection part in the exhaust gas purification apparatus provided with an oxidation catalyst, provided in the exhaust gas passage at a position at an upstream side from the NOₓ purification catalyst, for partially oxidizing the HC in the exhaust gas and a fuel injection part at a position at an upstream side from the oxidation catalyst.

Further, according to the exhaust gas purification system according to an embodiment of the present invention shown in FIG. 5, even when the exhaust gas exhausted from the engine is an exhaust gas composition containing HC and NOₓ in a stoichiometric ratio, by converting the air-fuel ratio from a stoichiometric ratio to a rich ratio by injection of fuel to the engine or by injection of fuel at the upstream side of the oxidation catalyst, it is possible to use the engine or catalytic action of the oxidation catalyst at a low temperature to partially oxidize the HC and increase the carbon monoxide. The exhaust gas composition introduced to the NOₓ purification catalyst, as shown in curve 4 or curve 5 in FIG. 2, includes HC and NO plus the increased amount of carbon monoxide, so the NO_{X} purification catalyst can be given a high NO_{X} purification performance. Further, in this embodiment of the present invention, when it is predicted that NO_{X} will not be exhausted, for example, the air-fuel ratio can be controlled to the lean side so as not to exhaust unburned HC from the engine.

The NO_{X} purification catalyst of the present invention, in the above way, has to comprise carrier particles on which are carried nanoparticles including gold atoms and nickel atoms in a state of close proximity. For this reason, the part where the atoms are in close proximity may include other metal atoms able to alloy with the two atoms, but an inert substance unable to alloy with the two atoms may be included only in a range able to secure a state where the two atoms are in close proximity. Therefore, the NO_{X} purification catalyst of the present invention can be obtained by for example using nanoparticles of the material forming the carrier as cores for obtaining nanoparticles in which the two metals are in close proximity. As other metal atoms able to alloy with both atoms of the gold atoms and nickel atoms, for example, tungsten (W), which can improve the heat resistance of gold by alloying, may be mentioned. Further, as the carrier particles, Al₂O₃, SiO₂, CeO₂, CeO₂-ZrO₂, and other metal oxides particles may be mentioned.

The NO_{X} purification catalyst in the present invention can be obtained by making carrier particles carry nanoparticles including gold atoms and nickel atoms in a state of close proximity. The nanoparticles including the gold atoms and nickel atoms in a state of close proximity can, for example, be obtained by reducing, in the presence of a polymer protective material, a mixture of a gold salt and a nickel salt, by a reducing agent, for example, a polyol. This reduction reaction is preferably performed in a solution, preferably an aqueous solution, while stirring. After the end of the reduction reaction, the polymer protective material is separated and removed by any separating means, for example, centrifugal separation, extraction, etc., and the obtained colloid in which the gold atoms and nickel atoms are present in a state of close proximity is uniformly mixed with the carrier so as to make the carrier carry nanoparticles which include gold atoms and nickel atoms in a state of close proximity. The size of the Au-Ni particles including the gold atoms and nickel atoms in a state of close proximity can be 0.2 to 100 nm, for example 1 to 20 nm or so.

As the gold salts, aurochloric acid (HAuCl₄), sodium chloroaurate, potassium chloroaurate, gold trisodium disulfite, potassium trisodium disulfite, etc. may be mentioned. As the nickel salt, for example, nickel sulfate, nickel nitrate, nickel chloride, nickel bromide, nickel acetate, nickel hydroxide, etc. may be mentioned. As the polyols, ethylene glycol, diethylene glycol, triethylene glycol, tetraethylene glycol, 1,2-propanediol, dipropylene glycol, 1,2-butanediol, 1,3-butanediol, 1,4-butanediol, 2,3-butanediol, 1,5-pentanediol, polyethylene glycol, etc. may be mentioned. To complete the reduction of the gold ions and nickel ions by the polyol, at the final stage of reduction, for example, boron dimethylamide, boron diethylamide, sodium borohydrate, borane, or another boron compound can be used as a reducing agent. As the polymer protective material, poly-N-vinylpyrrolidone, polyacrylamide, N-vinylpyrrolidone and acrylic acid copolymer, polyvinylmethylketone, poly(4-vinylphenol), oxazoline polymer, polyalkylene imine, and other polymers containing functional groups may be mentioned.

The NOₓ purification catalyst of the present invention is comprised of nanoparticles having gold and nickel as main ingredients. The composition of the gold and nickel is Au:Ni=7 to 91:93 to 9 (at%), preferably 20 to 80:80 to 20 (at%), particularly preferably 40 to 60:60 to 40 (at%). If the composition of gold and nickel in the solid is outside that range, the NO_{X} purification catalyst tends to drop in NO_{X} purification performance. The NO_{X} purification catalyst of the present invention combines gold and nickel and thereby has as a synergistic effect a superior NO_{X} purification performance unable to be obtained by single ingredients and in particular has superior catalytic activity of NO_{X} purification even compared with Rh or other single precious metals. Further, it is possible to determine the amount of the catalyst ingredient, that is, nanoparticles, or the carrier structure for purifying the NO_{X} in the exhaust gas to a sufficient level by the catalytic performance of the NO_{X} purification catalyst in the present invention.

In one embodiment in the present invention, as means for increasing the carbon monoxide (CO), it is possible to use fuel rich control to the engine or an oxidation catalyst for oxidizing the HC in the exhaust gas provided at a position at the upstream side from the NO_{X} purification catalyst of the exhaust gas passage and fuel injection at a position at the upstream side of the oxidation catalyst. At the low temperature at which the exhaust gas from the engine contains HC, the HC in the exhaust gas can be used to produce carbon monoxide by the oxidation catalyst. The oxidation catalyst oxidizing the HC is not particularly limited. For example, in general, a known catalyst used as an HC oxidation catalyst, for example, Pd/CeO₂, Ag/Al₂O₃, etc. may be mentioned.

According to the exhaust gas purification system of the present invention, an NO_{X} purification performance can be obtained even by an exhaust gas composition including HC and NO_{X}.

### EXAMPLES

Below, examples of the present invention are shown. In the following examples, the obtained catalysts were evaluated by the methods of measurement shown below.
1. Measurement of Alloy Composition of Catalyst
   Measurement method: Measurement of composition of bulk as a whole by XRD (X-ray diffraction)
   Measurement apparatus: PHILIPS X'Pert MRD
2. Measurement of Particle Shape and Particle Size Distribution of Alloy Nanoparticles
   Measurement method 1: Measurement by TEM (transmission electron microscope)
   TEM measurement apparatus: HITACHI HD-2000
   Measurement method 2: Measurement by HRTEM (high resolution transmission electron microscope)
   HRTEM Measurement apparatus: HITACHI HD2000
3. Measurement of Elemental Analysis of Alloy Nanoparticles
   Measurement method: Measurement of ratio of composition by TEM-EDS (EDS: energy dispersive X-ray spectroscopy)
   TEM-EDS measurement apparatus: HITACHI HD2000
4. Measurement of Catalytic Activity
   Catalyst pellets were packed into a glass reaction tube and fixed in place by glass wool. Premixed gas was run into the glass reaction tube. The gas temperature was raised at a temperature elevation rate of 20°C/min from 100°C to 500°C. The NO concentration was measured by an exhaust gas spectrometer (HORIBA MEXA7100H) or MS (mass spectrometry). Note that, when running a gas not containing H₂, the measurement was performed after hydrogen reduction at 500°C.

### Reference Example 1

### 1. Synthesis of AuNi Nanoparticles

In a two-necked flask, 1.1 g of poly-n-vinylpyrrolidone (PVP) was added to 120 ml of anhydrous ethylene glycol. Into this mixture, 0.1404 g of nickel sulfate was added. The mixture was agitated at 80°C for 3 hours to obtain a solution (solution 1).

Separately, in a two-necked flask, 0.1809 g of NaAuCl₄ was added to 50 ml of distilled water. The mixture was strongly agitated for 2 hours or more to cause dissolution and obtain a bright red colored solution (solution 2).

The solution 1 was cooled by a cooling bath down to 0°C, then the solution 2 was poured into the solution 1 in the flask and the two were uniformly agitated. The mixed solution was adjusted by a 1M NaOH solution (about 5 ml) to give a pH of 9 to 10. The mixed solution was heated by an oil bath to 100°C and was held for 2 hours while being agitated. After this, the flask was lifted up from the oil bath and allowed to stand until the colloidal suspension was cooled to room temperature. To completely reduce all of the ions in the flask, sodium borohydrate 0.038 g was added, then the suspension was allowed to stand for a while.

The produced nanoparticles were refined by treating a certain fraction including a predetermined amount of nanoparticles by a large amount of acetone. Due to this, the PVP polymer protective material was extracted in the acetone phase, and the metal nanoparticles coagulated. The supernatant was transferred (decanted) or centrifuged to obtain the colloid. The acetone phase was removed, then the refined colloid was gently stirred to disperse in pure ethanol.

### 2. Carrying of AuNi Nanoparticles on Carrier

In a 100 ml Schlenk flask, 1 g of the carrier (Al₂O₃) was inserted. The inside of the Schlenk flask was evacuated, then N₂ was run into it to clean the piping and completely remove the air. The concentration of the suspension of the colloid previously synthesized (both the refined colloid and remaining solution) was determined in advance, and a refined colloidal suspension containing Rh0.5wt% molar equivalents of amounts of gold and nickel metal was poured through a rubber septum into the Schlenk flask. The mixture was agitated at room temperature for 3 hours, then the solvent was removed by vacuum. After this, the remaining polymer protective material of the colloidal precipitate was removed and the result dried at 200 to 600°C by vacuum heating. The obtained catalyst powder was pressed to obtain pellets of approximately 2 mm size.

### 3. Evaluation of Catalyst

The obtained AuNi (50:50)/Al₂O₃ catalyst was measured for shape, particle size distribution, and elemental analysis of the alloy particles by TEM and TEM-EDS. The size of the nanoparticles was 3.75 nm±0.70 nm. Further, from a TEM-EDS spectrum measured for an AuNi (50:50) colloid on a copper coated grid, it is shown that all individual particles include gold and nickel.

Furthermore, the obtained AuNi (50:50)/Al₂O₃ catalyst was measured for NO purification characteristics under the following gas flow conditions.

### Gas flow conditions

Gas composition: NO 1000 ppm, CO 1000 ppm, N₂ bal/10 liter
Flow rate: 500 ml/min, pellets: 150 mg,
Space velocity: 3.3 liters/min•g
Ni, base metal concentrations: each 0.0486 mmol/g-cat

The results are shown together with other results in FIG. 1.

### Comparative Example 1

Except for not using the solution 1, the same procedure was followed as in Example 1 to obtain an Au/Al₂O₃ catalyst. The obtained Au/Al₂O₃ catalyst was measured for NO purification characteristics in the same way as in Example 1. The results are shown together with other results in FIG. 1.

### Comparative Example 2

### Synthesis of Ni nanoparticles

In a two-necked flask, 1.1 g of poly-n-vinylpyrrolidone (PVP) was added to 120 ml of anhydrous ethylene glycol. Into this mixture, 0.1404 g of nickel sulfate was added, then the mixture was agitated at 80°C for 3 hours. The obtained solution was cooled down to 0°C, then was adjusted to a pH of 9 to 10. The solution was held at 2 hours while being agitated. After this, the flask was lifted up from the oil bath and allowed to stand until the colloidal suspension was cooled to room temperature. The produced nanoparticles were refined by treating a certain fraction including a predetermined amount of nanoparticles by a large amount of acetone. Due to this, the protective PVP was extracted in the acetone phase, and the metal nanoparticles coagulated. The supernatant was decanted or centrifuged to obtain the colloid. The acetone phase was removed, then the refined colloid was gently stirred to disperse in pure ethanol.

### Carrying of Ni Nanoparticles on Carrier

In a 100 ml Schlenk flask, 1 g of the carrier (Al₂O₃) was inserted. The inside of the Schlenk flask was evacuated, then the piping was purged by N₂. The concentration of the colloid suspension previously synthesized (both the refined colloid and remaining solution) was determined in advance. A refined colloidal suspension containing Rh0.5wt% molar equivalents of an amount of nickel metal was poured into the Schlenk flask. The mixture was agitated at room temperature for 3 hours, then the solvent was removed by vacuum. After this, the remaining protective material of the colloidal precipitate was removed and the result fired at 200 to 600°C in a vacuum or the air. The obtained catalyst powder was pressed to obtain Ni/Al₂O₃catalyst pellets of approximately 2 mm size. The obtained Ni/Al₂O₃catalyst was measured for NO purification characteristic in the same way as Example 1. The results are shown together with other results in FIG. 1.

### Comparative Example 3

Except for using, as the two types of metal salts, nickel sulfate and NaAuCl₄ separately, the same procedure was followed as in Comparative Example 2 to cause metal to precipitate by evaporation of a gold and nickel mixed metal ion solution and thereby obtain (Au+Ni) mixture/Al₂O₃ catalyst pellets in which gold and nickel are not present in a state of close proximity. The obtained catalyst was measured for NO purification characteristic in the same way as Example 1. The results are shown together with other results in FIG. 1.

### Reference Example 2

Except for changing the carrier particles from Al₂O₃ to CeO₂-ZrO₂(CZ), the same procedure was followed as in Reference Example 1 to obtain an AuNi(50:50)/CZ catalyst. The obtained AuNi(50:50)/SiO₂catalyst was measured for shape, particle size distribution, and elemental analysis of the alloy particles by TEM and TEM-EDS. The size of the nanoparticles was 3.10 nm±1.42 nm. Further, from a TEM-EDS spectrum measured for an AuNi (50:50) colloid on a copper coated grid, it is shown that all individual particles include gold and nickel.

Furthermore, the obtained AuNi (50:50)/CZ catalyst was measured for catalytic activity under the following gas flow conditions.
Space Velocity(SV): 100000 (0.6 g, 1 L/min)

All conditions are balanced by N₂.

The H₂ treatment is done under 500°C before catalytic activity test

### Gas flow conditions:

(1) NO: 1500 ppm, CO: 1500 ppm (stoichiometric)
(2) NO: 1500 ppm, CO: 6500 ppm, O₂: 7000 ppm, C₃H₆: 1000 ppm (stoichiometric)
(3) NO: 1500 ppm, C₃H₆:167 ppm (stoichiometric)
(4) NO: 1500 ppm, CO: 1500 ppm, C₃H₆: 1000 ppm (rich)
(5) NO: 1500 ppm, CO: 1.55%, O₂: 7000 ppm, C₃H₆: 1000 ppm, (rich)

The obtained results are shown together with other results in FIG. 2.

### Example 1

In the above device used for measurement of catalytic activity, the AuNi (50:50)/CZ catalyst obtained in Reference Example 2 was used as an NO_{X} purification catalyst to prepare an exhaust gas purification apparatus. It was predicted that NO would be exhausted if this exhaust gas purification apparatus were fed with gas of the gas composition (2) under stoichiometric control. For this reason, C₃H₆ was added to change to rich control, and gas of the gas composition (6) was purified by the NO_{X} purification catalyst to obtain an NO purification characteristic the same as the curve shown in curve 6 of FIG. 2. Next, when it was predicted that NO would not be exhausted, gas of the gas composition (1) was fed by the NO_{X} purification catalyst for purification so as to obtain the same NO purification characteristic as the curve showing the curve 1 of FIG. 2.

Summarizing the industrial applicability, according to the exhaust gas purification system of the present invention, from the viewpoint of resource depletion, use is made of an NO_{X} purification catalyst using nickel - which is available to about the same extent as gold and copper. Using this, there is no need to raise the temperature of the catalyst for raising the NO_{X} purification activity to a high temperature like in the past, and a high NO_{X} purification performance can be obtained over a broad range of exhaust gas compositions.

## Claims

1. An exhaust gas purification system comprising an NO_{X} purification apparatus, provided with an NO_{X} purification catalyst (4) provided in an exhaust gas passage (3) and comprised of a carrier on which are carried nanoparticles including an alloy of gold atoms and nickel atoms in a state of close proximity, wherein the composition of the gold and nickel atoms is Au:Ni=7 to 91:93 to 9 (at%), means for increasing carbon monoxide in exhaust gas fed to said NO_{X} purification catalyst and means for predicting the amount of exhaust of NO_{X}, and configured so that, when it is predicted that NO_{X} will be exhausted, said means for increasing carbon monoxide in exhaust gas fed to said NO_{X} purification catalyst are operated and, when it is predicted that NO_{X} will not be exhausted, exhaust gas exhausted from an engine (2) is purified by said NO_{X} purification catalyst (4) without injection of excess fuel.

2. An exhaust gas purification system as set forth in claim 1, wherein said means for predicting the amount of exhaust of NO_{X} is an NO_{X} sensor (5) provided in said exhaust gas passage (3) at a position at a downstream side from said NO_{X} purification catalyst (4) or a means for prediction of an NO_{X} concentration from the relationship between an A/F value and temperature.

3. An exhaust gas purification system as set forth in claim 1 or 2, wherein said means for increasing carbon monoxide is configured to perform fuel rich control to the engine or is an oxidation catalyst (8), provided at a position in said exhaust gas passage (3) at an upstream side from said NO_{X} purification catalyst (4), for oxidizing the HC in the exhaust gas and a fuel injection part (9) provided at a position at an upstream side from said oxidation catalyst.

4. An exhaust gas purification system as set forth in any one of claims 1 to 3, wherein said means for increasing the carbon monoxide is a means for injection of fuel for lowering an A/F value until NO_{X} is no longer exhausted.

5. An exhaust gas purification system as set forth in any one of claims 1 to 4, wherein said NO_{X} purification apparatus is further provided with a device (7) for measuring the amount of exhaust of unreacted HC.

## Patentansprüche

1. Abgasreinigungssystem das eine NO_{X} Reinigungsvorrichtung aufweist, die mit einem NO_{X}-Reinigungskatalysator (4) vorgesehen ist, der in einem Abgaskanal (3) vorgesehen ist und einen Träger aufweist, der Nanopartikel trägt, die eine Legierung aus Goldatomen und Nickelatomen in einem Zustand der unmittelbaren Nähe umfasst, wobei die Zusammensetzung der Gold- und Nickelatome Au:Ni=7 bis 91:93 bis 9 (at%) ist, Mittel zum Anheben des Kohlenmonoxids im Abgas, das in den NO_{X}-Reinigungskatalysator gespeist ist und Mittel zum Vorhersagen der Abgasmenge von NO_{X}, und so eingerichtet ist, dass wenn vorhergesagt wird das NO_{X} ausgestoßen wird, das Mittel zum Anheben des Kohlenmonoxids im Abgas, das in den NO_{X}-Reinigungskatalysator gespeist ist, betreibbar ist und, wenn vorhergesagt wird, dass NO_{X} nicht ausgestoßen wird, das aus einem Motor (2) ausgestoßene Abgas von dem NO_{X}-Reinigungskatalysator (4) reinigbar ist, ohne eine Einspritzung von überschüssigem Kraftstoff.

2. Abgasreinigungssystem wie in Anspruch 1 dargelegt, wobei das Mittel zum Vorhersagen der Abgasmenge von NO_{X} ein NO_{X}-Sensor (5) ist, der in dem Abgaskanal (3) an einer Position an einer stromabwärtigen Seite des NO_{X}-Reinigungskatalysators (4) vorgesehen ist, oder ein Mittel zum Vorhersagen der NO_{X}-Konzentration aus der Beziehung zwischen einem A/F-Wert und einer Temperatur.

3. Abgasreinigungssystem wie in Anspruch 1 oder 2 dargelegt, wobei das Mittel zum Anheben von Kohlenmonoxid eingerichtet ist, eine Steuerung zum Anfetten des Kraftstoffes am Motor durchzuführen oder ein Oxidationskatalysator (8) ist, der an einer Position in dem Abgaskanal (3) an einer stromaufwärtigen Seite von dem NO_{X}-Reinigungskatalysator (4), zum Oxidieren des HC in dem Abgas, vorgesehen ist, und einem Kraftstoffeinspritzteil (9), der an einer Position an einer stromaufwärtigen Seite des genannten Oxidationskatalysator vorgesehen ist.

4. Abgasreinigungssystem wie in einem der Ansprüche 1-3 dargelegt, wobei das Mittel zum Anheben des Kohlenmonoxids ein Mittel zum Einspritzen von Kraftstoff, zum Senken des A/F-Wertes ist, bis NO_{X} nicht weiter ausgestoßen wird.

5. Abgasreinigungssystem wie in einem der Ansprüche 1-4 dargelegt, wobei die NO_{X}-Reinigungsvorrichtung ferner mit einer Vorrichtung (7) vorgesehen ist, zum Messen der Menge von Abgas von nicht reagiertem HC.

## Revendications

1. Système de purification de gaz d'échappement comportant un appareil de purification de NO_{X}, pourvu d'un catalyseur de purification de NO_{X} (4) prévu dans un passage de gaz d'échappement (3) et composé d'un support sur lequel sont supportées des nanoparticules comprenant un alliage d'atomes d'or et d'atomes de nickel dans un état de grande proximité, dans lequel la composition des atomes d'or et de nickel est Au:Ni = 7 à 91:93 à 9 (%), des moyens destinés à augmenter le monoxyde de carbone dans le gaz d'échappement délivré audit catalyseur de purification de NO_{X} et des moyens destinés à prévoir la quantité d'échappement de NO_{X}, et configurés de telle sorte que, lorsque l'on prévoit que du NO_{X} sera libéré, lesdits moyens destinés à augmenter le monoxyde de carbone dans le gaz d'échappement délivré au catalyseur de purification de NO_{X} sont mis en oeuvre et, lorsque l'on prévoit que du NO_{X} ne sera pas libéré, le gaz d'échappement libéré par un moteur (2) est purifié par ledit catalyseur de purification de NO_{X} (4) sans injection de carburant en excès.

2. Système de purification de gaz d'échappement selon la revendication 1, dans lequel lesdits moyens destinés à prévoir la quantité d'échappement de NO_{X} sont constitués par un capteur de NO_{X} (5) prévu dans ledit passage de gaz d'échappement (3) dans une position sut un côté en aval par rapport audit catalyseur de purification de NO_{X} (4) ou des moyens pour la prévision d'une concentration en NO_{X} à partir de la relation entre une valeur A/F et une température.

3. Système de purification de gaz d'échappement selon la revendication 1 ou 2, dans lequel lesdits moyens destinés à augmenter le monoxyde de carbone sont configurés pour réaliser une commande riche en carburant pour le moteur ou sont un catalyseur d'oxydation (8), prévu dans une position dans ledit passage de gaz d'échappement (3) sur un côté amont par rapport audit catalyseur de purification de NOₓ (4), pour l'oxydation du HC dans le gaz d'échappement et une partie d'injection de carburant (9) prévue dans une position sur un côté amont par rapport audit catalyseur d'oxydation.

4. Système de purification de gaz d'échappement selon l'une quelconque des revendications 1 à 3, dans lequel lesdits moyens destinés à augmenter le monoxyde de carbone sont des moyens pour l'injection de carburant afin d'abaisser une valeur A/F jusqu'à ce que du NOₓ ne soit plus libéré.

5. Système de purification de gaz d'échappement selon l'une quelconque des revendications 1 à 4, dans lequel ledit appareil de purification de NOₓ est en outre pourvu d'un dispositif (7) destiné à mesurer la quantité d'échappement de HC n'ayant pas réagi.
